# EUROPEAN PATENT APPLICATION

(11) **EP 4 142 035 A1**
(43) Date of publication of application: **01.03.2023**
(21) Application number: 21869633.4
(22) Date of filing: 09.09.2021
(51) Int. Cl.: H01M 50/403, H01M 50/449, H01M 50/446, B05C 1/08, B05C 9/14

(54) **SEPARATOR MANUFACTURING APPARATUS AND SEPARATOR MANUFACTURING METHOD**

(30) Priority: 17.09.2020 KR 20200119871
(71) Applicant: LG Energy Solution, Ltd., Seoul 07335 (KR)
(72) Inventor: LEE, Jong-Yoon, Daejeon 34122 (KR); SUNG, Dong-Wook, Daejeon 34122 (KR); KIM, Young-Bok, Daejeon 34122 (KR)
(74) Representative: Hoffmann Eitle
(86) International application number: PCT/KR2021/012314
(87) International publication number: WO 2022/060011

(57) **Abstract**

The present disclosure relates to an apparatus and method for manufacturing a separator. The apparatus for manufacturing a separator applies heat to a porous polymer substrate by using a heating roller, before the porous polymer substrate is introduced into a coater system for a porous coating layer. In this manner, it is possible to prevent the problem of waving and sagging of the polymer substrate.

## Description

### TECHNICAL FIELD

The present disclosure relates to an apparatus and method for manufacturing a separator for a secondary battery. Particularly, the present disclosure relates to an apparatus and method for manufacturing a separator which improve the problem of waving and sagging of a porous polymer substrate by heat treating both ends of the porous polymer substrate.

The present application claims priority to Korean Patent Application No. 10-2020-0119871 filed on September 17, 2020 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles.

In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

In addition, a separator used for a lithium secondary battery physically interrupts a positive electrode and a negative electrode from being in contact with each other, while allowing lithium-ion transport therethrough, and functions to insulate the positive electrode and the negative electrode electrically from each other. Particularly, it is known that the separator significantly affects the characteristics and safety of a battery, since it is responsible for maintaining insulation to inhibit an internal short-circuit of the battery.

Such a separator frequently uses a porous polymer substrate. However, the porous polymer substrate is problematic in that it may undergo heat shrinking at high temperature to cause an internal short-circuit between a positive electrode and a negative electrode. To improve the problem, an organic/inorganic porous coating layer containing inorganic particles and a binder polymer is coated on the porous polymer substrate so that heat shrinking may be reduced.

Herein, in order to form the porous coating layer on the porous polymer substrate, it is required to allow the porous polymer substrate to run into a coater system for a porous coating layer. However, during such a running process, there is a problem in that both ends of the porous polymer substrate sag and are finally in contact with the nozzle in the coater system.

### DISCLOSURE

### Technical Problem

The present disclosure is designed to solve the problems of the related art, and therefore the present disclosure is directed to improving the problem of waving and sagging of a porous polymer substrate.

The present disclosure is also directed to providing a separator in which a change in physical properties of a porous polymer substrate itself is minimized.

However, the technical problems to be solved by the present disclosure are not limited to the above problems. The other objects of the present disclosure may be understood by those skilled in the art from the following detailed description.

### Technical Solution

In one aspect of the present disclosure, there is provided an apparatus for manufacturing a separator according to any one of the following embodiments.

According to the first embodiment, there is provided an apparatus for manufacturing a separator, including:
a heating unit including a plurality of roller members configured to provide heat to at least one surface of a porous polymer substrate;
a substrate-supplying unit configured to allow the porous polymer substrate to run;
a coating unit configured to apply slurry for forming a porous coating layer onto the porous polymer substrate; and
a drying unit configured to dry the slurry for forming a porous coating layer to form a porous coating layer,
wherein at least one roller of the plurality of roller members has a portion removed.

According to the second embodiment, there is provided the apparatus for manufacturing a separator as defined in the first embodiment, wherein the roller members include at least one roller and a connection axis, and the roller has a central portion removed.

According to the third embodiment, there is provided the apparatus for manufacturing a separator as defined in the second embodiment, wherein the roller is provided as a pair of unit rollers, which may be spaced apart from each other.

According to the fourth embodiment, there is provided the apparatus for manufacturing a separator as defined in the third embodiment, wherein each of the pair of unit rollers is positioned in such a manner that it may be in contact with each of both ends of the porous polymer substrate.

According to the fifth embodiment, there is provided the apparatus for manufacturing a separator as defined in any one of the first to the fourth embodiments, wherein the plurality of roller members include upper roller members and lower roller members.

According to the sixth embodiment, there is provided the apparatus for manufacturing a separator as defined in the fifth embodiment, wherein at least one roller of the lower roller members is the same as or is larger than at least one roller of the upper roller members.

According to the seventh embodiment, there is provided the apparatus for manufacturing a separator as defined in any one of the first to the sixth embodiments, wherein the plurality of roller members are provided with a contact region that is in contact with the porous polymer substrate and a non-contact region that is not in contact with the porous polymer substrate.

According to the eighth embodiment, there is provided the apparatus for manufacturing a separator as defined in any one of the first to the seventh embodiments, wherein the slurry for forming a porous coating layer includes inorganic particles, a binder polymer and a solvent.

According to the ninth embodiment, there is provided the apparatus for manufacturing a separator as defined in any one of the first to the eighth embodiments, which further includes a winding unit configured to wind the porous polymer substrate on which the porous coating layer is formed.

In another aspect of the present disclosure, there is provided a method for manufacturing a separator for a secondary battery according to any one of the following embodiments.

According to the tenth embodiment, there is provided a method for manufacturing a separator for a secondary battery, including the steps of:
(S1) providing heat to both ends of a porous polymer substrate by using a plurality of roller members;
(S2) applying slurry for forming a porous coating layer to at least one surface of the porous polymer substrate; and
(S3) drying the slurry for forming a porous coating layer to form a porous coating layer.

According to the eleventh embodiment, there is provided the method for manufacturing a separator for a secondary battery as defined in the tenth embodiment, wherein the plurality of roller members are provided with a contact region that is in contact with the porous polymer substrate and a non-contact region that is not in contact with the porous polymer substrate.

According to the twelfth embodiment, there is provided the method for manufacturing a separator for a secondary battery as defined in the tenth embodiment, which further includes step (S4) of winding the porous polymer substrate on which the porous coating layer is formed.

### Advantageous Effects

The apparatus for manufacturing a separator according to an embodiment of the present disclosure applies heat to a porous polymer substrate by using a heating roller, before the porous polymer substrate is introduced into a coater system for a porous coating layer. In this manner, it is possible to prevent the problem of waving and sagging of the polymer substrate.

Particularly, the apparatus for manufacturing a separator according to an embodiment of the present disclosure heats merely both ends of the porous polymer substrate by using a heating roller. Therefore, it is possible to minimize a change in physical properties of the porous polymer substrate.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic view illustrating the apparatus for manufacturing a separator for a secondary battery according to the related art.
FIG. 2 is a schematic view illustrating the apparatus for manufacturing a separator for a secondary battery according to an embodiment of the present disclosure.
FIG. 3 is a schematic view illustrating the heating unit of the apparatus for manufacturing a separator for a secondary battery according to Comparative Example.
FIG. 4 is a schematic view illustrating the heating unit of the apparatus for manufacturing a separator for a secondary battery according to an embodiment of the present disclosure.
FIG. 5a and FIG. 5b are schematic views illustrating the front and the lateral side of the separator for a secondary battery according to the related art.
FIG. 6 is a schematic view illustrating the lateral side of the separator for a secondary battery according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

As used herein, the expression 'one portion is connected to another portion' covers not only `a portion is directly connected to another portion' but also `one portion is connected indirectly to another portion' by way of the other element interposed between them. In addition, 'connection' covers electrochemical connection as well as physical connection.

Throughout the specification, the expression `a part includes an element' does not preclude the presence of any additional elements but means that the part may further include the other elements.

In addition, it will be understood that the terms 'comprises' and/or 'comprising', or 'includes' and/or 'including' when used in this specification, refer to the presence of any stated shapes, numbers, steps, operations, members, elements and/or groups thereof, but do not preclude the addition of one or more other shapes, numbers, steps, operations, members, elements and/or groups thereof.

Hereinafter, the present disclosure will be explained in more detail.

### [Apparatus for Manufacturing Separator for Secondary Battery]

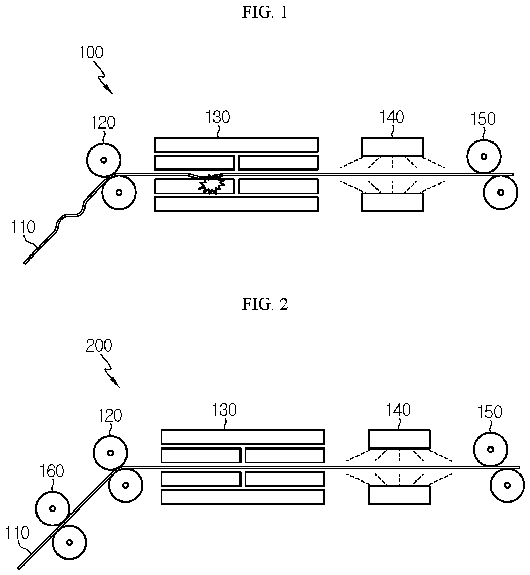

First, the overall constitution of the apparatus for manufacturing a separator according to an embodiment of the present disclosure will be explained with reference to FIG. 1 and FIG. 2. FIG. 1 is a schematic view illustrating the apparatus for manufacturing a separator for a secondary battery according to the related art. FIG. 2 is a schematic view illustrating the apparatus for manufacturing a separator for a secondary battery according to an embodiment of the present disclosure.

The apparatus 100 for manufacturing a separator for a secondary battery according to the related art includes a substrate-supplying unit 120 configured to allow a porous polymer substrate 110 to run into a coating unit 130, a coating unit 130 configured to apply slurry for forming a porous coating layer to the porous polymer substrate, a drying unit 140 configured to dry the solvent in the slurry for forming a porous coating layer to form a porous coating layer, and a winding unit 150 configured to wind the porous polymer substrate on which the porous coating layer is formed.

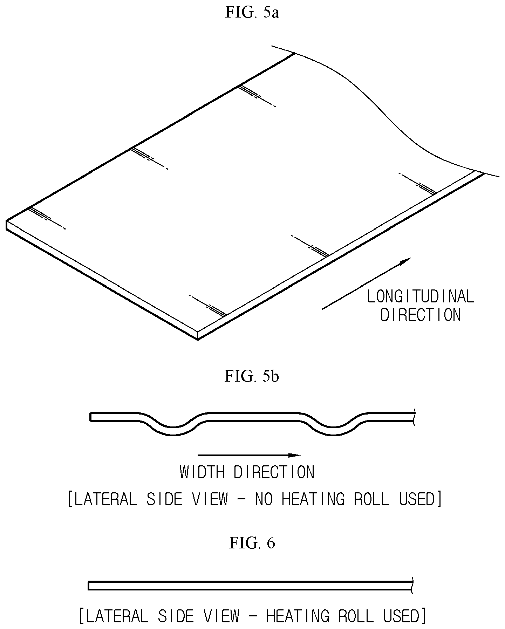

However, such a conventional apparatus causes the problem of waving, i.e. sagging of both ends of the porous polymer substrate, while the porous polymer substrate runs into the coating unit. This is shown in FIG. 5a and FIG. 5b. FIG. 5a and FIG. 5b are schematic views illustrating the front and the lateral side of the separator for a secondary battery according to the related art. As shown in FIG. 5a and FIG. 5b, the problem of waving occurs according to the related art, and the porous polymer substrate causes sagging at both ends thereof based on the width direction.

Particularly, the problem of waving and sagging of both ends may occur due to various causes exemplified as follows. First, the porous polymer substrate is not manufactured uniformly and the smoothness inside of the substrate is low. Second, when the substrate is wound in the form of a roll and stored, both ends thereof are less subjected to pressure as compared to the central portion to cause a difference in smoothness between the central portion and both ends. Third, when the slurry for forming a porous coating layer is applied to the porous polymer substrate to form a porous coating layer, the tension applied in the coating running direction (machine direction, MD) is not uniform between the central portion of the porous polymer substrate and both ends thereof, and relatively weaker tension is applied to both ends as compared to the central portion (i.e. waving and sagging may occur at both ends due to the non-uniform external force).

Due to such an end-sagging phenomenon, the drooped porous the porous polymer substrate is in contact with the nozzle inside of the coating unit 130 undesirably, when the porous polymer substate is introduced into the coating unit.

To solve the above-mentioned problem, in one aspect of the present disclosure, there is provided an apparatus for manufacturing a separator, including:
a heating unit including a plurality of roller members configured to provide heat to at least one surface of a porous polymer substrate;
a substrate-supplying unit configured to allow the porous polymer substrate to run;
a coating unit configured to apply slurry for forming a porous coating layer onto the porous polymer substrate; and
a drying unit configured to dry the slurry for forming a porous coating layer to form a porous coating layer,
wherein at least one roller of the plurality of roller members has a portion removed.

In other words, unlike the apparatus according to the related art, the apparatus for manufacturing a separator according to an embodiment of the present disclosure is further provided with a heating unit configured to carry out heat treatment of the porous polymer substrate, before the porous polymer substrate is introduced into the coating unit.

Referring to FIG. 2, the apparatus for manufacturing a separator according to an embodiment of the present disclosure includes: a heating unit 160 including a plurality of roller members configured to provide heat to at least one surface of a porous polymer substrate 110; a substrate-supplying unit 120 configured to allow the porous polymer substrate to run; a coating unit 130 configured to apply slurry for forming a porous coating layer onto the porous polymer substrate; and a drying unit 140 configured to dry the slurry for forming a porous coating layer to form a porous coating layer, and may optionally include a winding unit 150 configured to wind the porous polymer substrate on which the porous coating layer is formed.

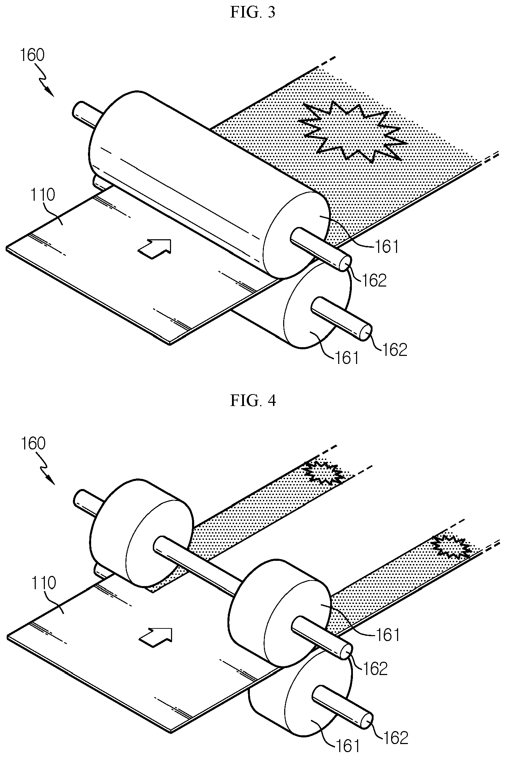

The heating unit 160 includes a plurality of roller members configured to provide heat to at least one surface of a porous polymer substrate, and is characterized in that at least one roller of the plurality of roller members has a portion removed. This is shown in FIG. 3 and FIG. 4.

FIG. 3 is a schematic view illustrating the heating unit of the apparatus for manufacturing a separator for a secondary battery according to Comparative Example. Referring to FIG. 3, since the porous polymer substrate is heated totally by the heating unit, the porous polymer substrate undergoes a change in physical properties, and thus the separator cannot realize desired performance in a secondary battery.

FIG. 4 is a schematic view illustrating the heating unit of the apparatus for manufacturing a separator for a secondary battery according to an embodiment of the present disclosure.

The heating unit includes roller members, and the roller members include at least one roller 161 and a connection axis 162. As shown in FIG. 4, the roller has a portion removed. The roller is provided as a pair of unit rollers, which may be spaced apart from each other.

Herein, each of the pair of unit rollers is positioned in such a manner that it is in contact with each of both ends of the porous polymer substrate. Particularly, the plurality of roller members may be provided with a contact region that is in contact with the porous polymer substrate and a non-contact region that is not in contact with the porous polymer substrate.

The plurality of roller members may include upper roller members and lower roller members. Herein, at least one roller of the lower roller members may be the same as or may be larger than at least one roller of the upper roller members.

As described above, at least one roller of the plurality of roller members has a portion removed. As shown in FIG. 3, when the heating unit applies heat totally to the porous polymer substrate, there is a problem in that even the central portion of the porous polymer substrate, where sagging does not occur, unlike both ends of the porous polymer substrate, undergoes a change in physical properties. Particularly, the porous polymer substrate is totally heated by the heating unit, and thus the pores may be blocked in a partial region of the porous polymer substrate. As a result, the separator may show increased air permeation time to cause an increase in resistance and cause degradation of mechanical properties.

On the other hand, the heating unit according to an embodiment of the present disclosure has a portion removed, and thus the central portion of the porous polymer substrate is a non-contact region that is not in contact with the roller. Therefore, it is possible to improve the problem of waving and sagging of both ends of the porous polymer substrate, while minimizing a change in physical properties at the central portion of the porous polymer substrate. For example, the heating unit according to an embodiment of the present disclosure includes specifically designed roller members so that both heat and pressure may be applied to both ends of the porous polymer substrate at the same time. As a result, it is possible to eliminate non-uniform external force, which, otherwise, causes the problem of waving and sagging at both ends of the porous polymer substrate. Therefore, it is possible to improve the problem of waving and sagging at both ends of the porous polymer substrate.

According to the present disclosure, the term `both ends' may refer to a ratio of the sum of the lengths of both ends based on the total width of the porous polymer substrate of 1-40%. Particularly, one of the both ends may refer to 0.5-20% based on the total width of the porous polymer substrate.

In addition, the roller members of the heating unit may have a temperature of 50-100°C, or 70-90°C. When the roller members have the above-defined range of temperature, it is possible to solve the problem of waving and sagging at both ends of the porous polymer substrate, while minimizing a change in physical properties at the central portion of the porous polymer substrate.

The substrate-supplying unit 120 is configured to allow the porous polymer substrate to run so that the porous polymer substate may be supplied to the inside of the coating unit configured to apply the slurry for forming a porous coating layer. The method for supplying the porous polymer substate may be any conventional method known to those skilled in the art and is not particularly limited, as long as it allows the porous polymer substrate to run so that the porous polymer substate may be supplied to the inside of the coating unit configured to apply the slurry for forming a porous coating layer.

The coating unit 130 is configured to apply the slurry for forming a porous coating layer onto at least one surface of the porous polymer substrate. There is no particular limitation in the method for coating the slurry for forming a porous coating layer onto the porous polymer substrate. Non-limiting examples of the coating method include slot coating or dip coating processes. Herein, slot coating includes coating s slurry supplied through a slot die onto the whole surface of a substrate and is capable of controlling the thickness of a coating layer depending on the flux supplied from a metering pump. In addition, dip coating includes dipping a substrate into a tank containing a slurry to carry out coating and is capable of controlling the thickness of a coating layer depending on the concentration of the slurry and the rate of removing the substrate from the tank. Further, in order to control the coating thickness more precisely, it is possible to carry out postmetering through a Mayer bar or the like, after dipping.

The drying unit 140 is configured to dry the porous coating layer coated on the porous polymer substrate 110 passing through the coating unit 130. Particularly, the solvent in the slurry for forming a porous coating layer is removed to form a porous coating layer. Herein, there is no particular limitation in the method for drying the slurry for forming a porous coating layer. For example, the porous polymer substrate on which the slurry for forming a porous coating layer is coated may be dried by using a dryer, such as an oven, to form a porous coating layer on at least one surface of the porous polymer substrate.

According to an embodiment of the present disclosure, the apparatus may further include a winding unit configured to wind the porous polymer substrate on which the porous coating layer is formed. Herein, the winding unit 150 is a member by which the porous polymer substrate coated with the porous coating layer is wound. The winding member may be any winding member with no particular limitation, as long as it is used conventionally in the art and can wind the porous polymer substrate.

### [Method for Manufacturing Separator for Secondary Battery]

Hereinafter, the method for manufacturing a separator including a porous coating layer formed on a porous polymer substrate by using the above-described apparatus for manufacturing a separator for a secondary battery will be explained.

In another aspect of the present disclosure, there is provided a method for manufacturing a separator for a secondary battery, including the steps of:
(S1) providing heat to both ends of a porous polymer substrate by using a plurality of roller members;
(S2) applying slurry for forming a porous coating layer to at least one surface of the porous polymer substrate; and
(S3) drying the slurry for forming a porous coating layer to form a porous coating layer.

Hereinafter, the method for manufacturing a separator for a secondary battery according to an embodiment of the present disclosure will be explained in more detail.

Heating step (S1) is a step of providing heat to both ends of the porous polymer substrate by using a plurality of roller members. Herein, the plurality of roller members are provided with a contact region that is in contact with the porous polymer substrate and a non-contact region that is not in contact with the porous polymer substrate. Reference will be made to the above description about the roller members.

After completing heating step (S1), the porous polymer substrate is allowed to run into the coating unit 130 by using the substrate-supplying unit 120. Then, the slurry for forming a porous coating layer is applied onto at least one surface of the porous polymer substrate by using the coating unit 130 (S2).

Particularly, the porous polymer substrate may be a porous polymer film substrate or a porous polymer nonwoven web substrate.

The porous polymer film substrate may be a porous polymer film including polyolefin, such as polyethylene, polypropylene. Such a polyolefin porous polymer film substrate realizes a shut-down function at a temperature of 80-150°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters, other than polyolefins, into a film shape. Further, the porous polymer film substrate may have a stacked structure of two or more film layers, wherein each film layer may be formed of polymers including the above-mentioned polymers, such as polyolefins or polyesters, alone or in combination of two or more of them.

In addition, the porous polymer film substrate and porous polymer nonwoven web substrate may be formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or in combination, besides the above-mentioned polyolefins.

There is no particular limitation in the thickness of the porous polymer substrate, the porous polymer substrate has a thickness of 1-100 µm, particularly 5-50 µm. Although there is no particular limitation in the size of the pores present in the porous polymer substrate and porosity, the pore size and porosity may be 0.01-50 µm and 20-75%, respectively.

Herein, the slurry for forming a porous coating layer includes inorganic particle, a binder polymer and a solvent.

The inorganic particles are not particularly limited, as long as they are electrochemically stable. In other words, the inorganic particles are not particularly limited, as long as they cause no oxidation and/or reduction in the operating voltage range (e.g. 0-5 V based on Li/Li⁺) of an applicable electrochemical device. Particularly, when using inorganic particles having a high dielectric constant, they contribute to an increase in dissociation degree of the electrolyte salt, particularly lithium salt, in a liquid electrolyte, and thus can improve ion conductivity of the electrolyte.

For these reasons, the inorganic particles may include inorganic particles having a dielectric constant of 5 or more, inorganic particles capable of transporting lithium ions and a mixture thereof.

The inorganic particles having a dielectric constant of 5 or more may be any one selected from the group consisting of Al₂O₃, SiO₂, ZrO₂, AlO(OH), TiO₂, BaTiO₃, Pb(ZrₓTi₁₋ₓ)O₃ (PZT, wherein 0 < x < 1), Pb₁₋ₓLaₓZr_{1-y}Ti_{y}O₃ (PLZT, wherein 0 < x < 1, 0 < y < 1), (1-x)Pb(Mg_{1/3}Nb_{2/3})O₃-xPbTiO₃ (PMN-PT, wherein 0 < x < 1), hafnia (HfO₂), SrTiO₃, SnO₂, CeO₂, MgO, NiO, CaO, ZnO, ZO₃ and SiC, or a mixture of two or more of them.

The inorganic particles capable of transporting lithium ions may be any one selected from the group consisting of lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂-based glass (LiₓSi_{y}S_{z}, 0 < x < 3, 0 < y < 2, 0 < z < 4) and P₂S₅-based glass (LiₓP_{y}S_{z}, 0 < x < 3, 0 < y < 3, 0 < z < 7), or a mixture of two or more of them.

Although the average particle diameter of the inorganic particles is not particularly limited, the inorganic particles may preferably have an average particle diameter of 0.001-10 µm, more preferably 1-700 nm, and even more preferably 20-500 nm, in order to form a porous coating layer having a uniform thickness and to provide suitable porosity.

In the separator according to an embodiment of the present disclosure, the binder polymer used for forming the porous coating layer may be one used currently for forming a porous coating layer in the art. Particularly, a polymer having a glass transition temperature (T_{g}) of -200 to 200°C may be used. This is because such a polymer can improve the mechanical properties, such as flexibility and elasticity, of the finally formed porous coating layer. Such a binder polymer functions as a binder which connects and stably fixes the inorganic particles with one another, and thus contributes to prevention of degradation of mechanical properties of a separator having a porous coating layer.

In addition, it is not essentially required for the binder polymer to have ion conductivity. However, when using a polymer having ion conductivity, it is possible to further improve the performance of an electrochemical device. Therefore, a binder polymer having a dielectric constant as high as possible may be used. In fact, since the dissociation degree of a salt in an electrolyte depends on the dielectric constant of the solvent for the electrolyte, a binder polymer having a higher dielectric constant can improve the salt dissociation degree in an electrolyte. The binder polymer may have a dielectric constant ranging from 1.0 to 100 (measured at a frequency of 1 kHz), particularly 10 or more.

In addition to the above-mentioned function, the binder polymer may be characterized in that it is gelled upon the impregnation with a liquid electrolyte and thus shows a high degree of swelling. Thus, the binder polymer has a solubility parameter (i.e., Hildebrand solubility parameter) of 15-45 MPa^{1/2} or 15-25 MPa^{1/2} and 30-45 MPa^{1/2}. Therefore, hydrophilic polymers having many polar groups may be used more frequently as compared to hydrophobic polymers, such as polyolefins. When the solubility parameter is less than 15 MPa^{1/2} and more than 45 MPa^{1/2}, it is difficult for the binder polymer to be swelled with a conventional liquid electrolyte for a battery.

Non-limiting examples of the binder polymer include, but are not limited to: polyvinylidene fluoride-co-hexafluoropropylene, polyvinylidene fluoride-cotrichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinylalchol, cyanoethyl cellulose, cyanoethyl sucrose, pullulan, carboxymethyl cellulose, or the like.

The weight ratio of the inorganic particles to the binder polymer may be 50:50-99:1, particularly 70:30-95:5. When the weight ratio of the inorganic particles to the binder polymer satisfies the above-defined range, it is possible to prevent the problem of a decrease in pore size and porosity of the resultant porous coating layer, caused by an increase in content of the binder polymer. It is also possible to solve the problem of degradation of peeling resistance of the resultant porous coating layer, caused by a decrease in content of the binder polymer.

The porous coating layer may further include other additives, besides the inorganic particles and the binder polymer.

Herein, non-limiting examples of the solvent include acetone, tetrahydrofuran, methylene chloride, chloroform, dimethyl formamide, N-methyl-2-pyrrolidone (NMP), cyclohexane, water, or a mixture thereof.

Then, the slurry for forming a porous coating layer is dried to form a porous coating layer (S3). Herein, the method for drying the slurry for forming a porous coating layer to form a porous coating layer is any conventional method known to those skilled in the art with no particular limitation.

According to an embodiment of the present disclosure, the method may further include step (S4) of winding the porous polymer substrate on which the porous coating layer is formed, after step (S3) of drying the slurry for forming a porous coating layer to form a porous coating layer. Herein, the method for winding the porous polymer substrate on which the porous coating layer is formed is any conventional method known to those skilled in the art with no particular limitation.

In the description of various embodiments of the present disclosure, it is to be understood that each constitutional element called 'unit' is a functionally differentiated element rather than a physically differentiated element. Therefore, each constitutional element may be optionally integrated with another constitutional element, or each constitutional element may be divided into sub-constitutional elements for the purpose of efficient practice of controlling logic(s). However, it is apparent to those skilled in the art that even the constitutional elements are integrated or divided, the integrated or divided constitutional elements also fall within the scope of the present disclosure, as long as the identity of the function can be recognized.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Description of Main Elements]

100, 200: Apparatus for manufacturing separator
110: Porous polymer substrate
120: Substrate-supplying unit
130: Coating unit
140: Drying unit
150: Winding unit
160: Heating unit
161: Roller
162: Connection axis

## Claims

1. An apparatus for manufacturing a separator, comprising:
a heating unit comprising a plurality of roller members configured to provide heat to at least one surface of a porous polymer substrate;
a substrate-supplying unit configured to allow the porous polymer substrate to run;
a coating unit configured to apply slurry for forming a porous coating layer onto the porous polymer substrate; and
a drying unit configured to dry the slurry for forming a porous coating layer to form a porous coating layer,
wherein at least one roller of the plurality of roller members has a portion removed.

2. The apparatus for manufacturing a separator according to claim 1, wherein the roller members comprise at least one roller and a connection axis, and the roller has a central portion removed.

3. The apparatus for manufacturing a separator according to claim 2, wherein the roller is provided as a pair of unit rollers, which are spaced apart from each other.

4. The apparatus for manufacturing a separator according to claim 3, wherein each of the pair of unit rollers is positioned in such a manner that it may be in contact with each of both ends of the porous polymer substrate.

5. The apparatus for manufacturing a separator according to claim 1, wherein the plurality of roller members comprise upper roller members and lower roller members.

6. The apparatus for manufacturing a separator according to claim 5, wherein at least one roller of the lower roller members is the same as or is larger than at least one roller of the upper roller members.

7. The apparatus for manufacturing a separator according to claim 1, wherein the plurality of roller members are provided with a contact region that is in contact with the porous polymer substrate and a non-contact region that is not in contact with the porous polymer substrate.

8. The apparatus for manufacturing a separator according to claim 1, wherein the slurry for forming a porous coating layer comprises inorganic particles, a binder polymer and a solvent.

9. The apparatus for manufacturing a separator according to claim 1, which further comprises a winding unit configured to wind the porous polymer substrate on which the porous coating layer is formed.

10. A method for manufacturing a separator for a secondary battery, comprising the steps of:
(S1) providing heat to both ends of a porous polymer substrate by using a plurality of roller members;
(S2) applying slurry for forming a porous coating layer to at least one surface of the porous polymer substrate; and
(S3) drying the slurry for forming a porous coating layer to form a porous coating layer.

11. The method for manufacturing a separator for a secondary battery according to claim 10, wherein the plurality of roller members are provided with a contact region that is in contact with the porous polymer substrate and a non-contact region that is not in contact with the porous polymer substrate.

12. The method for manufacturing a separator for a secondary battery according to claim 10, which further comprises step (S4) of winding the porous polymer substrate on which the porous coating layer is formed.
